# EUROPEAN PATENT APPLICATION

(11) **EP 1 184 617 A2**
(43) Date of publication of application: **06.03.2002**
(21) Application number: 01119743.1
(22) Date of filing: 27.08.2001
(51) Int. Cl.: F17C 13/04

(54) **High-, medium- and low-pressure reduction unit with a means for balancing the adjusting piston**

(30) Priority: 04.09.2000 IT MI001946; 28.06.2001 IT MI011370
(71) Applicant: Pergola S.r.l., 25010 Ponte S. Marco di Calcinato (Brescia) (IT)
(72) Inventor: Pagani, Angela, 25010 Ponte S. Marco di Calcinato (BR) (IT)
(74) Representative: Modiano, Guido, Dr.-Ing.

(57) **Abstract**

A high-, medium- and low-pressure reduction unit with a means for balancing the delivery piston which includes a reduction unit body (2) which forms a balancing chamber (3) which is connected to a delivery duct (10) and to an intake duct (11) which forms a passage port (12) on which an adjustment piston (13) pushed by an elastic means (17) acts. The particularity of the invention is that it includes a means (30) for balancing the adjustment piston (13), the balancing means (30) being controlled by the pressure that can be detected in the balancing chamber (3) independently of its value.

## Description

The present invention relates to a high-, medium- and low-pressure reduction unit with a means for balancing the delivery piston.

It is known that containers for pressurized fluids and particularly for pressurized gases such as oxygen and the like currently use pressure reduction units which utilize, for their operation, the concept of adjusting the delivery pressure by means of the direct thrust applied by means of an elastic member which interacts with the flow control piston.

With this type of solution, the spring is set during manufacture of the reduction unit and therefore any variations in the pressure of the delivered fluid cannot be compensated easily, thereby causing instability during operation and reduced delivery.

The aim of the invention is to solve the above mentioned problem, by providing a high-, medium- and low-pressure reduction unit with a means for balancing the delivery piston which allows to balance the adjustment piston so that it is possible to prevent operating instabilities and malfunctions in general.

Within this aim, a particular object of the invention is to provide a reduction unit that allows to increase the amount of fluid that can be delivered, with the possibility to perform balancing independently of the value of the pressure.

Another object of the present invention is to provide a high-, medium- and low-pressure reduction unit that is capable of giving the greatest assurances of reliability and safety in use thanks to its particular constructive characteristics.

Another object of the present invention is to provide a reduction unit which, while giving the greatest assurances of reliability and safety in use has also low manufacturing costs.

Another object of the present invention is to provide a high-, medium- and low-pressure reduction unit with a means for balancing the delivery piston which includes a reduction unit body which forms a balancing chamber being connected to a delivery duct and to an intake duct which forms a passage port on which an adjustment piston pushed by an elastic means acts, characterized in that it includes a means for balancing the adjustment piston, the balancing means being controlled by the pressure that can be detected in the balancing chamber independently of its value.

Further characteristics and advantages of the present invention will become better apparent from the description of a preferred but not exclusive embodiment of a high-, medium- and low-pressure reduction unit with a means for balancing the delivery piston, illustrated only by way of non-limitative example with the aid of the accompanying drawings, wherein:

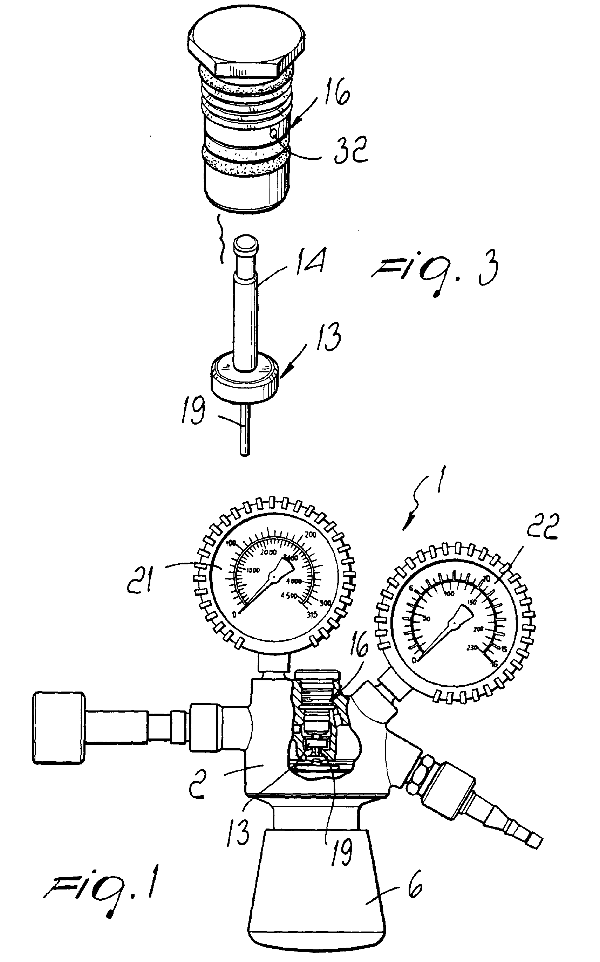

Figure 1 is a schematic and partially cutout view of the reduction unit according to the invention;

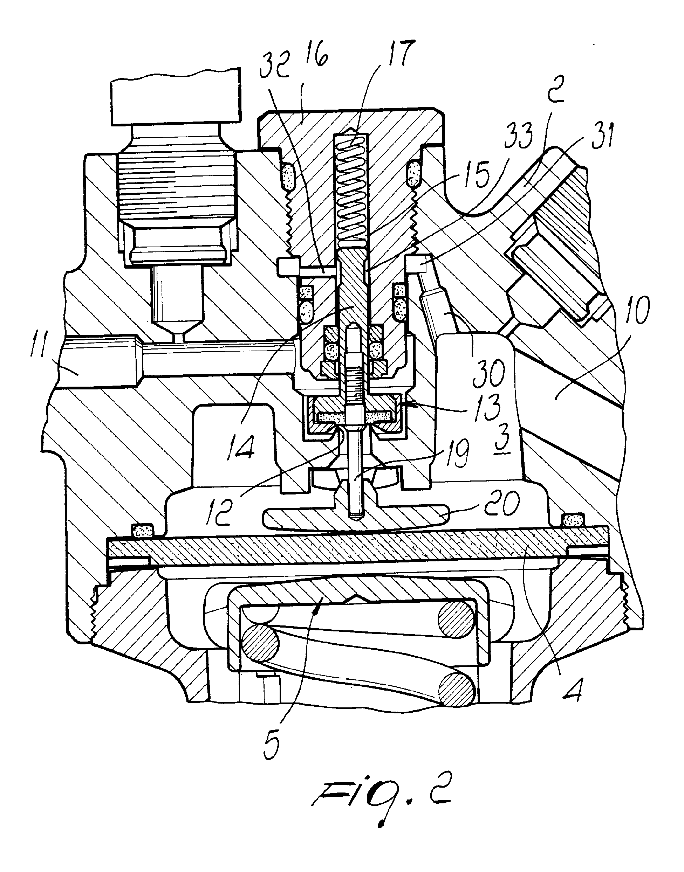

Figure 2 is a sectional view of a detail of the adjustment piston;
Figure 3 is a schematic perspective view of the ring and of the adjustment piston;
Figure 4 is a schematic sectional view of a different embodiment, illustrating the detail of the region for the connection of the adjustment piston;
Figure 5 is a schematic perspective view of the piston body; and
Figure 6 is a sectional view, taken along the line VI-VI of Figure 4.

With reference to the figures, the high-, medium- and low-pressure reduction unit with a means for balancing the delivery piston according to the invention, generally designated by the reference numeral 1, includes a reduction unit body 2, which forms internally a balancing chamber 3, which is delimited by a membrane 4 on which the conventional adjustment means 5 acts in a per se known manner; the adjustment means can be adjusted by way of a knob 6 which is external to the body 2.

The balancing chamber 3 is connected to a delivery duct 10 and to an intake duct 11 in which a fluid passage port 12 is provided, on said port acting an adjustment piston 13 provided with an upper stem 14 slidingly accommodated in a guide 15 formed by a ring 16 which can be coupled to the reduction unit body 2; an elastic pusher means, constituted by a spring 17, acts on the stem 14.

In a downward region, the piston 13 has a lower stem 19 which supports a plate 20 which acts against the membrane 4.

For the sake of completeness in description, it should also be added that an intake pressure gauge 21 can be arranged on the intake duct 11 and an output pressure gauge 22 can be connected to the balancing chamber 3.

The particularity of the invention consists in that a means is provided for balancing the adjustment piston 13 which is controlled by the pressure detectable in the balancing chamber regardless of its value.

Said balancing means is constituted by a branch duct 30, which branches off from the balancing chamber 3 and leads into a manifold 31 formed at a connection channel 32, which is provided in the ring 16 and is designed to connect the manifold 31 and accordingly the balancing chamber 3 to the guiding member in which the upper stem 14 slides; in the region where the connection channel 32 is provided, the stem 14 has a recess 33 which allows the operation of the adjustment piston to be controlled by the pressure that occurs in the balancing chamber, thus allowing to adjust the thrust that can be applied to the piston regardless of the pressure that occurs in the chamber 3 and in practice constitutes the regulated pressure.

From the above description it is therefore evident that the invention achieves the intended aim and objects, and in particular the fact is stressed that by providing a connection to the upper stem of the adjustment piston, the thrust applied to the adjustment piston takes into account, in a way, the regulated pressure value, balancing the operation of the adjustment piston so that in practice the thrust that can be applied by the spring 17 is leveled out.

With this arrangement, therefore, it is possible to have considerable stability during operation, furthermore avoiding instabilities and vibrations and allowing to provide higher delivery.

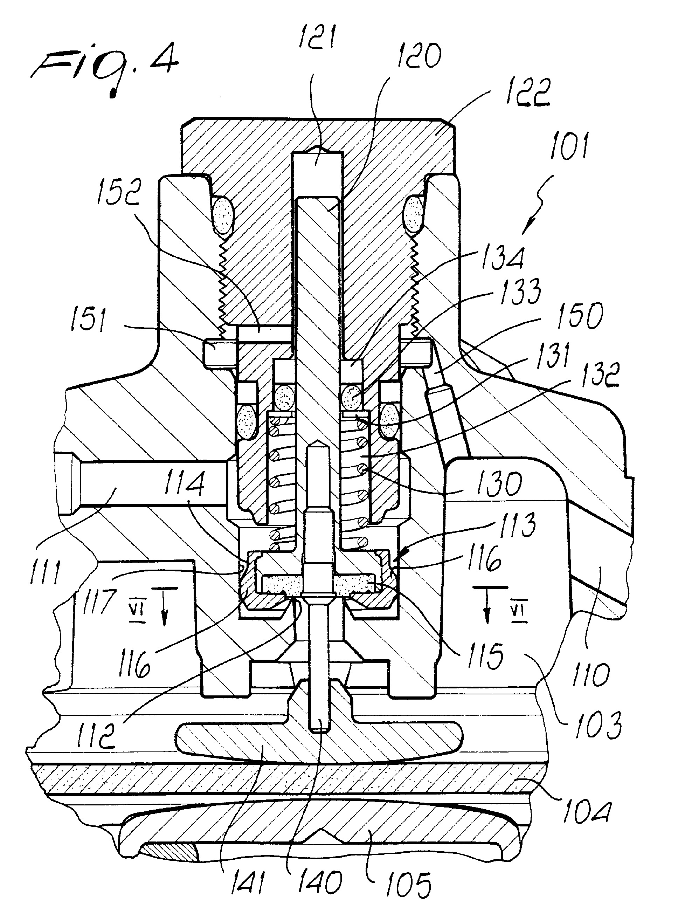

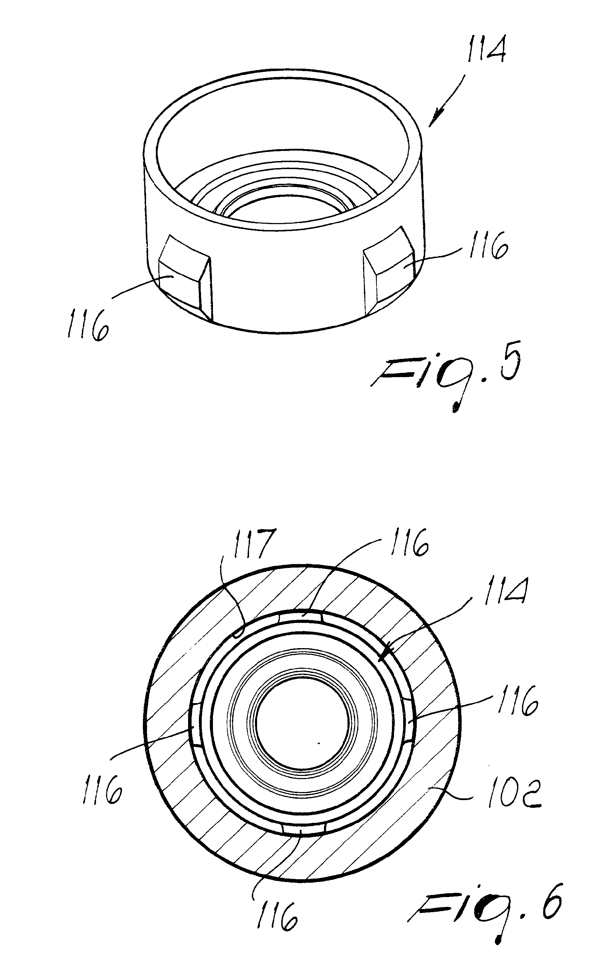

A different embodiment of the high-, medium- and low-pressure reduction unit with a means for balancing the delivery piston, according to the invention, is described with reference to Figures 4 to 6; the reduction unit is generally designated by the reference numeral 101 and includes a reduction unit body 102 which forms, inside it, a balancing chamber 103 which is delimited in a downward region by a membrane 104 on which the conventional setting means, designated by the reference numeral 105, acts in a per se known manner.

The balancing chamber 103 is connected to a delivery duct 110 and to an intake duct 111, in which there is a port 112 for the passage of the fluid which is controlled by an adjustment piston, generally designated by the reference numeral 113.

The adjustment piston 113 has a piston body 114 which supports, in a downward region, a sealing gasket 115 which can be coupled to the port 112 and forms, on its outer surface, radial wings 116 which act as a guiding member for axial sliding for engagement with the internal walls of the cylindrical seat 117 formed around the port 112.

The adjustment piston 113 has an upper stem 120 slidingly accommodated in a guide 121 formed by a ring 122 which can be coupled to the reduction unit body 2.

Elastic pusher means act on the piston 113 and are constituted by a spring 130, which engages the base of the piston body 114 at one end and abuts, at the other end, against a washer 131 which is accommodated in the cavity 132 that accommodates the spring.

The washer 131 is arranged in contact with a first O-Ring 133, which acts on the stem 120 and engages, on the opposite side, an extrusion-preventing annular member 134 arranged in the upper part.

In a downward region, the piston body 114 is connected to a lower stem 140, which supports a plate 141 which acts on the membrane 104.

In order to perform balancing, there is a branch duct 150, which branches off from the balancing chamber 103 and leads into a manifold 151 arranged at a connecting channel 152 formed in the ring 122 so as to connect the manifold 151, and accordingly the balancing chamber 103, to the guide 121 in which the upper stem 120 slides.

With the above described arrangement it is possible to optimize the guiding of the adjustment piston 113 thanks to the presence of the radial wings that move in the seat 117; moreover, the elastic pusher means can act directly on the piston body, thus achieving a greater possibility of setting the spring which acts, at its other end, directly on the washer for retaining the sealing O-ring.

The illustrated variation allows to eliminate the lip that had to be provided on the ring in order to keep in position the annular member for preventing the extrusion of the sealing members.

Furthermore, the spring is structurally simplified and capable of providing improved operation.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Applications No. MI2000A001946 and MI2001A001370 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A high-, medium- and low-pressure reduction unit with a means for balancing the delivery piston, comprising a reduction unit body (2,102) which forms a balancing chamber (3,103) which is connected to a delivery duct (10,110) and to an intake duct (11,111) which forms a passage port (12,112) on which an adjustment piston (13,113) pushed by an elastic means (17,130) acts, **characterized in that** it comprises a means (30,150) for balancing said adjustment piston (13,113), said balancing means (30,150) being controlled by the pressure that can be detected in said balancing chamber (3,103) independently of its value.

2. The reduction unit according to claim 1, **characterized in that** said adjustment piston (13) comprises a piston body which acts on said port (12) and is connected to an upper stem (14) which can slide hermetically within a guide (15) formed by a ring (16) which is connected to said body, said guide (15) accommodating said elastic means (17) which act on the end of said upper stem (14).

3. The reduction unit according to the preceding claims, **characterized in that** it comprises a lower stem (19) which is connected to said piston body and is associated with a plate (20) which acts by contact on the membrane (4) arranged so as to close said balancing chamber (3).

4. The reduction unit according to one or more of the preceding claims, **characterized in that** said balancing means comprises a duct (30) for connection between said balancing chamber (3) and said guide (15).

5. The reduction unit according to one or more of the preceding claims, **characterized in that** said duct (30) is connected to a manifold (31) which is arranged at a channel (32) for connection to said guide (15).

6. The reduction unit according to one or more of the preceding claims, **characterized in that** said upper stem (14) has a recess (33) at said connection channel (32).

7. The reduction unit according to one or more of the preceding claims,
**characterized in that** said adjustment piston (113) comprises a piston body (114) which supports a gasket (115) for forming a seal on said port (112), said body (114) being provided with radial wings (116) for guiding its axial sliding.

8. The reduction unit according to one or more of the preceding claims, **characterized in that** said piston body (114) can slide axially in a cylindrical seat (117) formed around said port (112).

9. The reduction unit according to one or more of the preceding claims, **characterized in that** it comprises an upper stem (120) which is connected to said adjustment piston (113) and is slidingly accommodated in a guide (121) formed by a ring (122) which can be coupled to said reduction unit body (2), an elastic means acting on said piston body (114) and being constituted by a spring (130) which can engage said piston body (114) at one end and, at the other end, against a washer (131) accommodated in the cavity (132) that accommodates said spring (130).

10. The reduction unit according to one or more of the preceding claims, **characterized in that** it comprises a first O-ring (133), which is arranged between said washer (131) and an extrusion-preventing annular member (134) accommodated in said cavity (132).
